# EUROPEAN PATENT SPECIFICATION

(11) **EP 0 947 566 B1**
(45) Date of publication and mention of the grant of the patent: **24.03.2004**
(21) Application number: 99106688.7
(22) Date of filing: 01.04.1999
(51) Int. Cl.: C09D 4/00, C09D 5/24, C08F 222/10, H01J 29/28

(54) **Conductive coating composition and antistatic plate**
Leitfähige Beschichtungsmasse und antistatische Platte
Composition de revêtement conductive et plaque antistatique

(30) Priority: 03.04.1998 JP 9177498
(43) Date of publication of application: 06.10.1999
(73) Proprietor: SUMITOMO CHEMICAL COMPANY LIMITED, Osaka-shi, Osaka 541-0041 (JP); SUMITOMO OSAKA CEMENT CO., LTD., Chiyoda-ku, Tokyo 101-8677 (JP)
(72) Inventor: Nakagawa, Yoshimi, Kyoto-shi, Kyoto-fu (JP); Mutou, Kiyoshi, Ibaraki-shi, Osaka-fu (JP); Ochiai, Shinsuke, Nishinomiya-shi, Hyogo-ken (JP); Izawa, Hajime, Kaizuka-shi, Osaka-fu (JP); Yamamoto, Yuji, Kaizuka-shi, Osaka-fu (JP); Horikoshi, Hideki, Funabashi-shi, Chiba-ken (JP)
(74) Representative: VOSSIUS & PARTNER

(56) References cited:
- EP-A- 0 281 365
- EP-A- 0 626 431
- EP-A- 0 789 268
- PATENT ABSTRACTS OF JAPAN vol. 096, no. 005, 31 May 1996 (1996-05-31) & JP 08 020734 A (SUMITOMO OSAKA CEMENT CO LTD), 23 January 1996 (1996-01-23)
- PATENT ABSTRACTS OF JAPAN vol. 017, no. 319 (E-1383), 17 June 1993 (1993-06-17) & JP 05 036314 A (SUMITOMO METAL MINING CO LTD;OTHERS: 01), 12 February 1993 (1993-02-12)

## Description

The present invention relates to a conductive coating composition and an antistatic plate produced from such a conductive coating composition. The present invention further relates to a front panel for a display comprising such an antistatic plate, and a screen for a projection television comprising such an antistatic plate.

Antistatic plates are widely used as front panels for displays such as screens for projection televisions.

Hitherto, an antistatic plate is known, which comprises a substrate and an antistatic layer that is formed on the surface of the substrate by applying a coating composition containing conductive particles with a specific particle size dispersed in a curable compound and curing the composition (JP-A-8-20734). Such an antistatic plate exhibits antistatic properties since a cured layer, which is formed on the surface of a substrate, has conductivity.

However, an antistatic plate, which is produced by applying the above-described coating composition on the surface of a substrate and curing it, may have insufficient surface hardness on the surface of a cured layer, or insufficient transparency.

One object of the present invention is to provide a coating composition which can provide an antistatic plate having thereon a transparent cured layer with good surface hardness.

Another object of the present invention is to provide an antistatic plate having sufficient surface hardness and transparency.

According to the first aspect, the present invention provides a coating composition comprising 100 wt. parts of a curable compound having at least three (meth) acryloyloxy groups in a molecule,or its oligomer, and 2 to 7 wt. parts of conductive particles having a primary particle size of 0.01 µm or less.

According to the second aspect, the present invention provides an antistatic plate comprising a substrate and a cured layer formed on the substrate by applying the above coating composition of the present invention on the surface of the substrate and curing the applied composition.

According to the third aspect, the present invention provides a front panel comprising such an antistatic plate.

According to the fourth aspect, the present invention provides a screen for a projection television comprising such an antistatic plate.
Fig. 1 is the transmission electron microphotograph (x 20,000) of the cross section of the cured layer of an antistatic plate produced in Example 1,
Fig. 2 is the transmission electron microphotograph (x 200,000) of the cross section of the cured layer of an antistatic plate produced in Example 1,
Fig. 3 is the transmission electron microphotograph (x 20,000) of the cross section of the cured layer of an antistatic plate produced in Comparative Example 1, and
Fig. 4 is the transmission electron microphotograph (x 200, 000) of the cross section of the cured layer of an antistatic plate produced in Comparative Example 1.

Herein, the terms "(meth)acryloyloxy", "(meth)acrylate", and "(meth)acrylic acid" indicate "acryloyloxy or methacryloyloxy", "acrylate or methacrylate", and "acrylic acid or methacrylic acid", respectively.

Curable compounds contained in the coating composition of the present invention are those having at least three (meth) acryloyloxy groups in a molecule, although there are various curable compounds including compounds having one (meth)acryloyloxy group in a molecule and compounds having two (meth)acryloyloxy groups in a molecule,

The number of (meth)acryloyloxy groups contained in each molecule of curable compounds is at least three, and curable compounds may have 4, 5, 6, 7, 8 or more (meth) acryloyloxy groups.

Specific examples of such curable compounds include trimethylolpropane tri(meth)acrylate, trimethylolethane tri(meth)acrylate, tetramethylolmethane tri(meth)acrylate, tetramethylolmethane tetra(meth)acrylate, pentaglycerin tri(meth)acrylate, pentaerythritol tri(meth)acrylate, pentaerythritoltetra(meth)acrylate, glycerintri(meth)acrylate, dipentaerythritol tri(meth)acrylate, dipentaerythritol tetra(meth)acrylate, dipentaerythritol penta(meth)acrylate, dipentaerythritol hexa(meth)acrylate and tris[(meth)acryloyloxyethyl] isocyanurate,

Furthermore, curable compounds may be phosphazene (meth) acrylate compounds having at least three (meth) acryloyloxy groups introduced in a phosphazene ring of phosphazene compounds; urethane (meth)acrylate compounds having at least three (meth)acryloyloxy groups, which are prepared by reacting polyisocyanate having at least two isocyanate groups in a molecule and compounds having at least one hydroxyl group and at least two (meth) acryloyloxy groups in a molecule; polyester (meth) acrylate compounds having at least three (meth)acryloyloxy groups, which are prepared by reacting compounds having at least two carboxylic acid halide groups in a molecule and compounds having at least one hydroxyl group and at least two (meth)acryloyloxy group in molecule; and urethane acrylate compounds which are prepared by reacting one mole of isocyanate compounds and at least two mole of (meth)acrylate monomers having active hydrogen atoms.

Curable compounds having at least three (meth) acryloyloxy groups may be used singly or in admixture of two or more of them.

These compounds are monomers, and they may be used in the form of a monomer, or in the form of an oligomer such as a dimer or a trimer.

Such curable compounds may be commercially available ones such as "NK HARD® M101" (urethane acrylate compounds available from SHIN-NAKAMURA CHEMICAL Co., Ltd.), "NK ESTER® A-TMM-3L" (tetramethylolmethane triacrylate available from SHIN-NAKAMURA CHEMICAL Co., Ltd.), "NK ESTER® A-9530" (dipentaerythritol hexaacrylate available from SHIN-NAKAMURA CHEMICAL Co., Ltd.), "KAYARAD® DPCA Series" (dipentaerythritol hexaacrylate available from NIPPON KAYAKU CO., LTD.), "ARONIX® M-8500" (polyester acrylate compounds available from TOAGOSEI CO., LTD.), "NEW FRONTIER® TEICA" (tris(acryloyloxyethyl) isocyanurate available from DAI-ICHI KOGYO SEIYAKU CO., LTD.), and "PPZ" (phosphazene type methacrylate compounds available from KYOEISHA CHEMICAL CO., LTD.).

Curable compounds or their oligomers can be cured by the irradiation with actinic rays such as electron beams, radioactive rays and UV rays.

Examples of conductive particles are conductive inorganic particles such as antimony-doped tin oxide, phosphorus-doped tin oxide, antimony oxide, zinc antimonate, titanium oxide and indium-tin oxide (ITO).

The primary particle size of conductive particles is about 0.01 µm or less. When the primary particle size exceeds 0.01 µm, obtained antistatic plates will have a large haze so that their transparency tends to decrease. Preferably, a primary particle size is about 0.008 µm or less. In general, the lower limit of the primary particle size of conductive particles is about 0.001 µm.

The primary particle size of conductive particles can be measured by forming a layer from a conductive paint containing conductive particles, taking the transmission electron microphotograph of the layer, and observing the particles in the layer.

The used amount of conductive particles is usually from about 2 to about 7 wt. parts, preferably from about 2 to about 6 wt. parts, per 100 wt. parts of a curable compound having at least three (meth)acryloyloxy groups in a molecule or its oligomer. When the amount of conductive particles is less than about 2 wt. parts, a coating composition may have an insufficient conductivity. When the amount of conductive particles exceeds about 7 wt. parts, the scratch resistance of a layer formed from a coating composition may deteriorate.

Such conductive particles can be produced e.g. by vapor phas decomposing methods, plasma vaporizing methods, alkoxide decomposing methods, co-precipitation methods or hydrothermal methods.

The surfaces of conductive particles may be coated with, for example, nonionic surfactants, cationic surfactants, anionic surfactants, silicon type coupling agents and aluminum type coupling agents.

The coating composition of the present invention comprising a curable compound or its oligomer and conductive particles dispersed therein may be prepared by mixing the curable compound and the conductive particles. A part of the curable compound may be in the form of an oligomer.

The mixing is preferably carried out in the presence of a solvent. When a solvent is used, the conductive particles and the solvent are mixed to disperse the conductive particles in the solvent, and then the curable compound is added to the dispersion. Alternatively, the curable compound and the solvent are mixed, and then the conductive particles are added to the mixture.

The kind of a solvent is not limited insofar as conductive particles can be dispersed therein, a curable compound can be dissolved therein, and the solvent can be evaporated off after the application of a coating composition.

Examples of solvents include water, alcohols (e.g. diacetone alcohol, methanol, ethanol and isopropanol), ketones (e.g. acetone, methyl ethyl ketone and methyl isobutyl ketone), aromatics (e.g. toluene and xylene), and esters (e.g. ethyl acetate).

When commercially available curable compounds having at least three (meth)acryloyloxy groups in a molecule or their oligomer are used, they may be distributed in a diluted form with solvents. In such a case, such solvents can be used as the solvents of the coating composition of the present invention.

The coating composition of the present invention may contain other curable compounds or their oligomers. The other curable compounds are used to impart flexibility to cured layers formed from the coating composition.

Examples of other curable compounds are compounds having one (meth) acryloyloxy group in a molecule such as (meth) acrylic acid, methyl (meth)acrylate, ethyl (meth)acrylate, butyl (meth)acrylate, n-hexyl (meth)acrylate, cyclohexyl (meth)acrylate and 2-ethylhexyl (meth)acrylate; and compounds having two (meth) acryloyloxy groups in a molecule such as ethylene glycol di(meth)acrylate, diethylene glycol di(meth)acrylate, 1,6-hexanediol (meth)acrylate, and neopentyl glycol di(meth)acrylate.

Additional examples of other curable compounds are saturated or unsaturated mixed polyester compounds of (meth)acrylic acid having one or two (meth)acryloyloxy groups in a molecule, which are formed from combinations of compounds such as malonic acid-trimethylolethane-(meth)acrylic acid, malonic acid-trimethylolpropane-(meth)acrylic acid, malonic acid-glycerin-(meth)acrylic acid, malonic acid-pentaerythritol-(meth)acrylic acid, succinic acid-trimethylolethane-(meth)acrylic acid, succinic acid-trimethylolpropane-(meth)acrylic acid, succinic acid-glycerin-(meth)acrylic acid, succinic acid-pentaerythritol-(meth)acrylic acid, adipic acid-trimethylolethane-(meth)acrylic acid, adipic acid-trimethylolpropane-(meth) acrylic acid, adipic acid-pentaerythritol- (meth) acrylic acid, adipic acid-glycerin-(meth)acrylic acid, glutaric acid-trimethylolethane-(meth)acrylic acid, glutaric acid-trimethylolpropane-(meth)acrylic acid, glutaric acid-glycerin-(meth)acrylic acid, glutaric acid-pentaerythritol-(meth)acrylic acid, sebacic acid-trimethylolethane-(meth)acrylic acid, sebacic acid-trimethylolpropane-(meth)acrylic acid, sebacic acid-glycerin-(meth)acrylic acid, sebacic acid-pentaerythritol-(meth)acrylic acid, fumaric acid-trimethylolethane-(meth)acrylic acid, fumaric acid-trimethylolpropane-(meth)acrylic acid, fumaric acid-pentaerythritol-(meth)acrylic acid, fumaric acid-glycerin-(meth)acrylic acid, itaconic acid-trimethylolethane-(meth)acrylic acid, itaconic acid-trimethylolpropane-(meth)acrylic acid, itaconic acid-pentaerythritol-(meth)acrylic acid, maleic anhydride-trimethylolethane-neth)acrylic acid and maleic anhydride-glycerin-(meth)acrylic acid.

Further examples of other curable compounds are compounds having unsaturated bonds in a molecule such as styrene, methylstyrene, chlorostyrene, bromostyrene, maleic acid, maleic anhydride, maleimide, N-methylmaleimide and N-vinylpyrrolidone.

When other curable compounds are used, they may be dissolved in solvents together with curable compounds having at least three (meth)acryloyloxy groups in a molecule or their oligomers, or they may be added together with conductive particles. Alternatively, other curable compounds may be added to solvents before or after the addition of curable compounds having at least three (meth)acryloyloxy groups and conductive particles.

The amount of other curable compound is usually 50 wt. parts or less, that is, about 0 to 50 wt. parts, per 100 wt. parts of curable compounds having at least three (meth) acryloyloxy groups or their oligomers. When the amount of the other curable compound exceeds 50 wt. parts, the surface hardness of a cured layer formed from a coating composition tends to decrease.

The coating composition of the present invention may contain polymerization initiators and/or sensitizers.

The polymerization initiators may be any conventional ones such as phenylketone compounds and benzophenone compounds. or any commercially available ones such as "IRGACURE® 184" and "IRGACURE® 907" (both available from NIPPON CIBA-GEIGY Co., Ltd.), "DALOCURE® 1173" (available from MERK JAPN Co., Ltd.), "EZACURE® KIP 100F" (available from NIHON SIBER HEGNER KABUSHIKIKAISHA), etc. Also, the sensitizers may be commercially available ones such as "EZACURE® EDB" (available from NIHON SIBER HEGNER KABUSHIKIKAISHA).

Polymerization initiators and sensitizers are used to facilitate the curing of a coated layer formed by applying the coating composition of the present invention.

The conductive coating composition of the present invention is applied on the surface of a substrate and cured to form, on the surface of the substrate, a cured layer comprising the cured product of a curable compound having at least three (meth) acryloyloxy groups in a molecule and conductive particles having a primary particle size of 0.01 µm or less which are dispersed in the cured product. Thus, an antistatic plate is obtained.

When the coating composition of the present invention contains other curable compound, such other curable compound and a curable compound having at least three (meth)acryloyloxy groups in a molecule are cured to form a cured layer comprising the cured product of such curable compounds and conductive particles having a primary particle size of 0.01 µm or less which are dispersed in the cured product. Thus, an antistatic plate is obtained.

Substrates are not limited. Examples of substrates are glass plates, and plates, sheets or films of synthetic resins (e.g. acrylic resins, polycarbonate resins, polystyrene, styrene-acrylate copolymers, acrylonitrile-styrene copolymers and polyolefins such as polyethylene and polypropylene).

The coating composition of the present invention may be applied on a substrate with any conventional coating means such as a bar coater and a roll coater. Thus, a curable layer is formed on the surface of a substrate.

Then, the curable layer is usually cured by the irradiation with actinic rays to obtain an antistatic plate, which comprises a substrate, and a cured layer containing the cured product of a curable compound having at least three (meth)acryloyloxy groups in a molecule and conductive particles having a primary particle size of 0.01 µm or less dispersed in the cured product. When other curable compound having one or two (meth) acryloyloxy groups is used, a cured layer formed on the surface of a substrate comprises a cured product of a curable compound having at least three (meth)acryloyloxy groups and the other curable compound having one or two (meth)acryloyloxy groups, and conductive particles having a primary particle size of 0.01 µm or less dispersed in the cured product.

Actinic rays to cure a curable layer formed on the surface of a substrate may be electron rays, radioactive rays, UV rays, etc., and are selected according to their intensities, irradiation time and kinds of curable compounds.

When a conductive coating composition contains a solvent, a curable layer formed in the surface of a substrate can be cured after or at the same time as the evaporation of the solvent.

The thickness of the formed cured layer is preferably in the range between about 0.5 and about 50 µm, more preferably in the range between about 1 and 20 µm. When the thickness of the cured layer exceeds about 50 µm, the cured layer tends to be easily cracked. When the thickness of the cured layer is less than about 0.5 µm, the scratch resistance of the cured layer tends to deteriorate.

Conductive particles having a primary particle size of about 0.01 µm or less in a cured layer usually form secondary particles having a particle size of about 0.1 µm or less, and the secondary particles are arranged to form network structures in the cured layer.

The reason why the antistatic plate of the present invention has good transparency (i.e. a total light transmission and haze) may be that the amount of conductive particles is relatively low, and the secondary particle size is about 0.1 µm or less. The reason why such an antistatic plate has good conductivity (i.e. a small surface resistivity) may be that the secondary particles are arranged to form network structures.

Accordingly, the antistatic plates of the present invention are useful as front panels for displays, in particular, screens for projection televisions.

When the primary particle size of conductive particles is larger than the upper limit of the particle size according to the present invention, the surface resistivity of a cured layer cannot decrease, that is, the conductivity deteriorates, unless the amount of conductive particles is increased. However, the increase of the amount of conductive particles deteriorates the transparency of a cured layer.

An antireflection layer may be formed on the surface of a cured layer.

An antireflection layer may be formed by any conventional method. For example, the conductive coating composition of the present invention is applied on the surface of a substrate to form a curable layer, and then an antireflection layer is formed on the surface of the curable layer. In the concrete, a solution for the formation of an antireflection layer is applied on a curable layer, and then dried. After drying, actinic rays such as electron beams, UV rays or radioactive rays, may be irradiated to cure the curable layer. The irradiation of actinic rays can perform the curing of the curable layer and the drying of the antireflection layer at the same time. Alternatively, a formed curable layer is cured to obtain a cured layer, and then an antireflection layer is formed on the surface of the cured layer. In the concrete, a solution for the formation of an antireflection layer is applied on the surface of the cured layer and then dried. Subsequently, the dried antireflection layer may be cured by the irradiation with actinic rays, or by heating.

Examples of solutions for the formation of an antireflection layer include "SYTOP®" (available from Asahi Glass Co., Ltd.), "OPSTAR® JN7212" and "OPSTAR® JM5022" (both available from Japan Synthetic Rubber Co., Ltd.) and "OA-201E" (trade name) (available from Nissan Chemical Industries, Ltd.).

An additional method for the formation of an antireflection layer is the formation of an antireflection layer on a cured layer by a physical vapor deposition method (PVD) such as sputtering.

The antistatic plate of the present invention, which can be produced as described above, has sufficient antistatic properties, good transparency, and high surface hardness on the surface of a cured layer. Thus, such an antistatic plate can be used as a front panel for a display, which allows light from a display screen to pass therethrough, for example, a front panel for displays such as cathode ray tubes (CRT), liquid crystal displays, plasma displays, electroluminescent displays and light-emitting diode displays.

When the antistatic plate of the present invention is used as a front panel for a projection type display in which images are projected on the surface of the front panel such as a projection television, the images are more clearly projected on the screen and the image has better definition than a front panel containing conductive particles having a primary particle size larger than about 0.01 µm. Accordingly, the antistatic plate of the present invention is also useful as a screen for a projection type display.

The conductive coating composition of the present invention can provide a cured layer which has good transparency, surface hardness and conductivity, and thus can be used to produce antistatic plates having sufficient transparency, surface hardness and conductivity, and also to produce front panels for displays and screens for projection televisions.

### EXAMPLES

The present invention will be illustrated by the following examples which do not limit the scope of the present invention in any way.

Antistatic plates produced in Examples and Comparative Examples were evaluated by the following methods:

### (1) Total light transmission (Tₜ)

A total light transmission was determined by measuring the total amount of transmitted light in relation to incident visible light according to ASTM D-1003.

### (2) Haze

A haze was measured according to ASTM D-1003.

### (3) Pencil hardness

Pencil hardness was measured according to JIS K-5400.

### (4) Steel wool hardness

Steel wool No. 0000 was reciprocated ten times on the surface of a cured layer under a load of 500 g/cm². Then, the presence of scratches on the surface of the cured layer was observed.

### (5) Surface resistivity

A surface resistivity on the surface of a cured layer was measured according to JIS K-6911.

### (6) Adhesion property of cured layer

A cross cut test was carried out according to JIS K-5400, and the number of the peeled cross-cut areas of a cured layer per 100 areas was counted.

### (7) Reflection characteristics

A length of a black polyvinyl chloride tape ("VINYL TAPE VT-50 available from NICHIBAN COMPNAY, LTD.) was adhered to the back surface of an antistatic plate. Then, an absolute mirror reflectance was measured at an incident angle of 5 degrees with a spectrophotometer (MPC-3100 manufactured by SHIMADZU CORPORATION), and a Y value was calculated (JIS Z-8722).

### Example 1

A conductive coating composition was prepared by mixing 6.9 wt. parts of dipentaerythritol hexaacrylate ("NK ESTER® A-9530" available from SHIN-NAKAMURA CHEMICAL Co., Ltd.), 10,8 wt. parts of methyl ethyl ketone and 24.2 wt. parts of diacetone alcohol with 53.6 wt. parts of a curable composition containing conductive particles ("SUMICEFINE® R-311" available from SUMITOMO OSAKA CEMENT CO., LTD.), which contained 1.5 wt. parts of antimony-doped tin oxide (average primary particle size: 0.005 µm), 16.5 wt. parts of dipentaerythritol hexaacrylate, 45 wt. parts of methyl ethyl ketone and 15 wt. parts of diacetone alcohol in 100 wt. parts of the curable composition containing conductive particles ("SUMICEFINE® R-311"). In this conductive coating composition, the amount of antimony-doped tin oxide was 5.1 wt. parts per 100 wt. parts of dipentaerythritol hexaacrylate.

The conductive coating composition was applied on one surface of an acrylic resin plate having a thickness of 2 mm ("SUMIPEX® E" available from Sumitomo Chemical Co., Ltd.) with a bar coater, and dried to form a curable layer. Then, the curable layer was cured by the irradiation with UV rays to obtain an antistatic plate.

The results of the evaluation of this antistatic plate are shown in Table 1.

When this antistatic plate was used as a screen for a projection type display, the projected images had good definition.

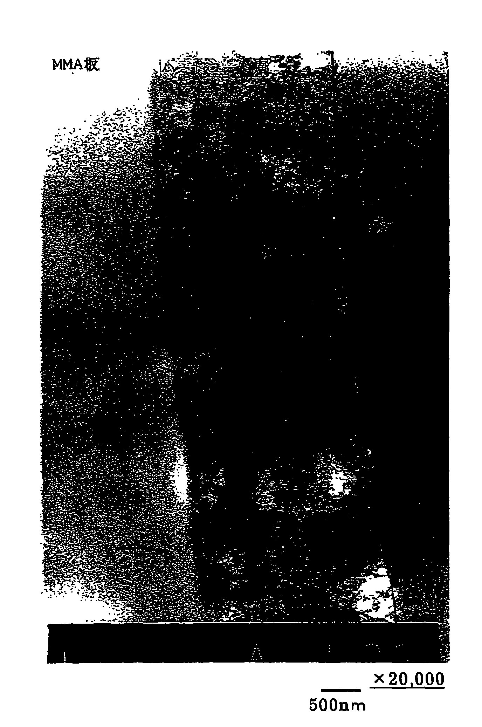

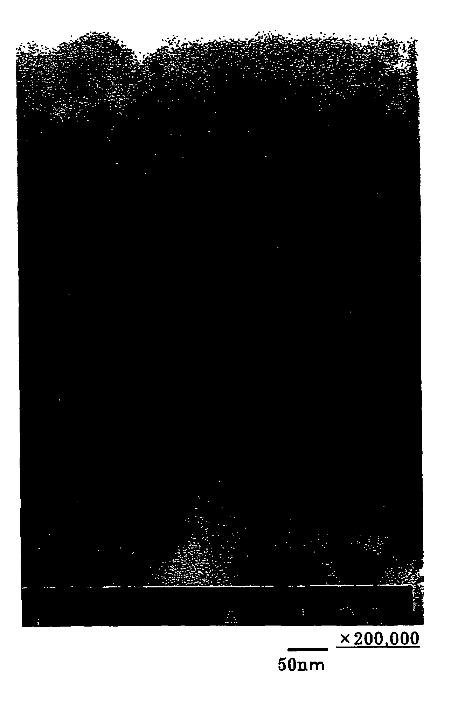

The transmission electron microphotographs of the cross section of the cured layer in this antistatic plate are shown in Figs. 1 and 2. In Fig. 1 with a magnification of 20,000, the left side is an acrylic resin plate, and a cured layer having a thickness of about 2.3 µm is formed at the center. It can be seen from Fig. 1 that the conductive particles were arranged to form network structures. Fig. 2 is the magnified microphotograph of Fig. 1 with a magnification of 200, 000, from which it can be seen that the primary particle size of conductive particle was 0.01 µm or less, and secondary particles having a particle size of about 0.05 µm were formed.

### Examples 2-5

An antistatic plate was produced in the same manner as in Example 1 except that 6.9 wt. parts of trimethylolpropane triacrylate ("NK ESTER® A-TMPT" available from SHIN-NAKAMURA CHEMICAL Co., Ltd.) (in Example 2), 6.9 wt. parts of tetramethylolmethane triacrylate ("NK ESTER® A-TMM-3L" available from SHIN-NAKAMURA CHEMICAL Co., Ltd.) (in Example 3), 6.9 wt. parts of tetramethylolmethane tetraacrylate ("NK ESTER® A-TMMT" available from SHIN-NAKAMURA CHEMICAL Co., Ltd.) (in Example 4), or 6.9 wt parts of an urethane acrylate compound ("NK HARD® M101" available from SHIN-NAKAMURA CHEMICAL Co., Ltd.) was used in place of 6.9 wt. parts of dipentaerythritol hexaacrylate ("NK ESTER® A-9530").

The results of the evaluation of the antistatic plate are shown in Table 1.

### Comparative Example 1

The curable composition containing conductive particles ("SUMICEFINE® R-311" available from SUMITOMO OSAKA CEMENT CO., LTD.) used in Example 1 as such was used as a conductive coating composition. In this conductive coating composition, the content of antimony-doped tin oxide is 9.2 wt. parts per 100 wt. parts of dipentaerythritol hexaacrylate.

This conductive coating composition was applied on one surface of an acrylic resin plate having a thickness of 2 mm ("SUMIPEX® E" available from Sumitomo Chemical Co., Ltd.) with a bar coater, and dried to form a curable layer. Then, the curable layer was cured by the irradiation with UV rays to obtain an antistatic plate.

The results of the evaluation of this antistatic plate are shown in Table 1.

### Comparative Example 2

A conductive coating composition was prepared by mixing 21 wt. parts of antimony-doped tin oxide (primary particle size: 0.02 - 0.5 µm), 24 wt. parts of an urethane acrylate compound ("NK HARD® M101" available from SHIN-NAKAMURA CHEMICAL Co., Ltd.), 1 wt. part of a photopolymerization initiator ("IRGACURE® 184" available from NIPPON CIBA-GEIGY Co., Ltd.), 45 wt. parts of methyl isobutyl ketone and 9 wt. parts of ethylene glycol monoethylether. In this conductive coating composition, the content of antimony-doped tin oxide is 87.5 wt. parts per 100 wt. parts of the urethane acrylate.

An antistatic plate was produced in the same manner as in Comparative Example 1 except that the above prepared conductive coating composition was used.

The results of the evaluation of this antistatic plate are shown in Table 1.

When this antistatic plate was used as a screen for a projection type display, the projected images had slightly inferior definition to those projected on the antistatic plate of Example 1.

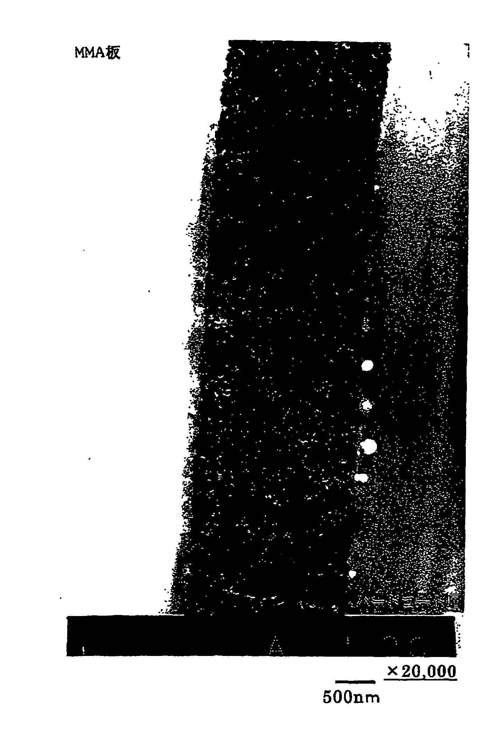

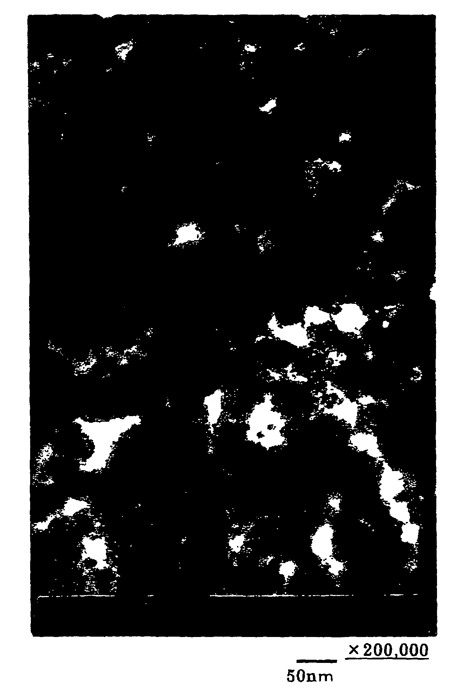

The transmission electron microphotographs of the cross section of the cured layer in this antistatic plate are shown in Fig.3 (x 20,000) and Fig. 4 (x 200, 000). It can be understood from these electron microphotographs that the conductive particles were uniformly dispersed in the cured layer.

### Comparative Example 3

A conductive coating composition was prepared by mixing 12 wt. parts of antimony-doped tin oxide (primary particle size: 0.02 - 0.5 µm), 32 wt. parts of an urethane acrylate compound ("NK HARD® M101" available from SHIN-NAKAMURA CHEMICAL Co., Ltd.), 1 wt. part of a photopolymerization initiator ("IRGACURE® 184" available from NIPPON CIBA-GEIGY Co., Ltd.), 50 wt. parts of methyl isobutyl ketone and 5 wt. parts of ethylene glycol monoethylether. In this conductive coating composition, the content of antimony-doped tin oxide is 36 wt. parts per 100 wt. parts of the urethane acrylate.

An antistatic plate was produced in the same manner as in Comparative Example 1 except that the above prepared conductive coating composition was used.

The results of the evaluation of this antistatic plate are shown in Table 1.

This antistatic plate had a high surface resistivity; that is, low conductivity, and insufficient transparency.

**Table 1**

| | Tₜ | Haze | Steel wool hardness | Pencil hardness | Surface resistivity (Ω/□) | Adhesion property |
|---|---|---|---|---|---|---|
| Ex. 1 | 92.6 | 0.5 | No scratch | 5H-6H | 2.5 x 10¹⁰ | No peeling |
| Ex. 2 | 92.7 | 0.3 | No scratch | 5H-6H | 6.9 x 10⁹ | No peeling |
| Ex. 3 | 92.7 | 0.4 | No scratch | 5H-6H | 3.6 x 10¹⁰ | No peeling |
| Ex. 4 | 92.6 | 0.3 | No scratch | 5H-6H | 4.5 x 10⁹ | No peeling |
| Ex. 5 | 92.8 | 0.3 | No scratch | 5H-6H | 1.1 x 10¹⁰ | No peeling |
| C. Ex. 1 | 92.8 | 0.3 | Scratched | 3H-4H | 5.8 x 10⁹ | No peeling |
| C. Ex. 2 | 80.1 | 2.5 | No scratch | 5H | 4.3 x 10¹⁰ | No peeling |
| C. Ex. 3 | 87.0 | 1.8 | No scratch | 5H | 9.0 x 10¹³ | No peeling |

### Example 6

A solution for an antireflection layer ("OPSTAR® JM5022" (available from Japan Synthetic Rubber Co., Ltd.) was coated on the cured layer of the antistatic plate produced in Example 1, dried and then irradiated with UV rays to form an antireflection layer on the antistatic plate.

The reflection properties of this antistatic plate. are shown in Table 2.

**Table 2**

| | Y value |
|---|---|
| Ex. 1 | 4.5 |
| Ex. 6 | 1.9 |

## Claims

1. A coating composition comprising 100 wt. parts of a curable compound having at least three (meth)acryloyloxy groups in a molecule,or its oligomer, and 2 to 7 wt. parts of conductive particles having a primary particle size of 0.01 µm or less.

2. A coating composition according to claim 1, which further comprises 50 wt. parts or less of a curable compound other than said curable compound having at least three (meth)acryloyloxy groups in a molecule, or its oligomer, per 100 wt. parts of said curable compound having at least three (meth) acryloyloxy groups in a molecule,or its oligomer.

3. An antistatic plate comprising a substrate and a cured layer formed on the substrate, wherein said cured layer contains 100 wt. parts of a cured product of a curable compound having at least three (meth) acryloyloxy groups in a molecule, or its oligomer, and 2 to 7 wt. parts of conductive particles having a primary particle size of 0.01 µm or less dispersed in said cured product.

4. An antistatic plate according to claim 3, wherein said cured product further contains 50 wt. parts or less of a cured product of a curable compound other than said curable compound having at least three (meth) acryloyloxy groups in a molecule, or its oligomer, per 100 wt. parts of said cured product of said curable compound having at least three (meth) acryloyloxy groups in a molecule,or its oligomer.

5. An antistatic plate according to claim 3 or 4, wherein said conductive particles form secondary particles having a particle size of 0.1 µm or less, and said secondary particles are arranged to form network structures in said cured layer

6. An antistatic plate according to claim 3 or 4, wherein said cured layer has a thickness of from 0.5 to 50 µm.

7. An antistatic plate according to any one of claims 3 to 6, which has an antireflection layer on the surface of said cured layer.

8. A front panel for a display comprising an antistatic plate as claimed in any one of claims 3 to 7.

9. A screen for a projection television comprising an antistatic plate as claimed in any one of claims 3 to 7.

10. A method for producing an antistatic plate as claimed in claim 3, comprising the steps of
applying a coating composition which comprises 100 wt. parts of a curable compound having at least three (meth)acryloyloxy groups in a molecule or its oligomer, and 2 to 7 wt. parts of conductive particles having a primary particle size of 0.01 µm or less to form a curable layer, and
curing said curable layer to form a cured layer.

11. A method for producing an antistatic plate as claimed in claim 4, comprising the steps of
applying a coating composition which comprises 100 wt. parts of a curable compound having at least three (meth)acryloyloxy groups in a molecule or its oligomer, 50 wt. parts or less of a curable compound other than said curable compound having at least three (meth)acryloyloxy groups in a molecule, or its oligomer, and 2 to 7 wt. parts of conductive particles having a primary particle size of 0.01 µm or less to form a curable layer, and
curing said curable layer to form a cured layer.

12. A method for producing an antistatic plate according to claim 10 or 11 which further comprises the step of forming an antireflection layer on the surface of said cured layer.

## Patentansprüche

1. Beschichtungsmasse, umfassend 100 Gewichtsteile einer härtbaren Verbindung mit mindestens drei (Meth)acryloyloxyresten in einem Molekül, oder deren Oligomer, und 2 bis 7 Gewichtsteile leitfähiger Teilchen mit einer Primärteilchengröße von 0,01 µm oder weniger.

2. Beschichtungsmasse nach Anspruch 1, weiterhin umfassend 50 Gewichtsteile oder weniger einer härtbaren Verbindung, welche von der härtbaren Verbindung mit mindestens drei (Meth)acryloyloxyresten in einem Molekül, oder deren Oligomer verschieden ist, pro 100 Gewichtsteile der härtbaren Verbindung mit mindestens drei (Meth)acryloyloxyresten in einem Molekül, oder deren Oligomer.

3. Antistatische Platte umfassend ein Substrat und eine auf dem Substrat gebildete, gehärtete Schicht, wobei die gehärtete Schicht 100 Gewichtsteile eines gehärteten Produkts einer härtbaren Verbindung mit mindestens drei (Meth)acryloyloxyresten in einem Molekül, oder deren Oligomer, und 2 bis 7 Gewichtsteile leitfähiger Teilchen mit einer Primärteilchengröße von 0,01µm oder weniger enthält, welche in dem gehärteten Produkt dispergiert sind.

4. Antistatische Platte nach Anspruch 3, wobei das gehärtete Produkt weiterhin 50 Gewichtsteile oder weniger eines gehärteten Produkts einer härtbaren Verbindung, welche von der härtbaren Verbindung mit mindestens drei (Meth)acryloyloxyresten in einem Molekül, oder deren Oligomer verschieden ist, pro 100 Gewichtsteile des gehärteten Produkts der härtbaren Verbindung mit mindestens 3 (Meth)acryloyloxyresten in einem Molekül, oder. deren Oligomer, enthält.

5. Antistatische Platte nach Anspruch 3 oder 4, wobei die leitfähigen Teilchen Sekundärteilchen mit einer Teilchengröße von 0,1 µm oder weniger bilden, und die Sekundärteilchen so angeordnet sind, daß sie Netzstrukturen in der gehärteten Schicht bilden.

6. Antistatische Platte nach Anspruch 3 oder 4, wobei die gehärtete Schicht eine Dicke von 0,5 bis 50 µm aufweist.

7. Antistatische Platte nach einem der Ansprüche 3 bis 6, welche eine Antireflexionsschicht auf der Oberfläche der gehärteten Schicht aufweist.

8. Frontplatte für ein Display, umfassend eine antistatische Platte nach einem der Ansprüche 3 bis 7.

9. Bildschirm für einen Projektor, umfassend eine antistatische Platte nach einem der Ansprüche 3 bis 7.

10. Verfahren zur Herstellung einer antistatischen Platte nach Anspruch 3, umfassend die Schritte:
Aufbringen einer Beschichtungsmasse umfassend 100 Gewichtsteile einer härtbaren Verbindung mit mindestens 3 (Meth)acryloyloxyresten in einem Molekül, oder deren Oligomer, und 2 bis 7 Gewichtsteile leitfähiger Teilchen mit einer Primärteilchengröße von 0,01 µm oder weniger, um eine härtbare Schicht zu bilden, und
Aushärten der härtbaren Schicht um eine gehärtete Schicht zu bilden.

11. Verfahren zur Herstellung einer antistatischen Platte nach Anspruch 4, umfassend die Schritte:
Aufbringen einer Beschichtungsmasse umfassend 100 Gewichtsteile einer härtbaren Verbindung mit mindestens drei (Meth)acryloyloxyresten in einem Molekül, oder deren Oligomer, 50 Gewichtsteile oder weniger einer härtbaren Verbindung, welche von der härtbaren Verbindung mit mindestens drei (Meth)acryloyloxyresten in einem Molekül, oder deren Oligomer verschieden ist, und 2 bis 7 Gewichtsteile leitfähiger Teilchen mit einer Primärteilchengröße von 0,01 µm oder weniger, um eine härtbare Schicht zu bilden, und
Aushärten der härtbaren Schicht, um eine gehärtete Schicht zu bilden.

12. Verfahren zur Herstellung einer antistatischen Platte nach Anspruch 10 oder 11, weiterhin umfassend den Schritt des Bildens einer Antireflexionsschicht auf der Oberfläche der gehärteten Schicht.

## Revendications

1. Composition de revêtement comprenant 100 parties en poids d'un composé durcissable comprenant au moins trois groupes (méth)acryloyloxy dans une molécule, ou dans son oligomère, et 2 à 7 parties en poids de particules conductrices possédant une taille particulaire primaire de 0,01 µm ou moins.

2. Composition de revêtement selon la revendication 1, qui comprend, en outre, 50 parties en poids ou moins d'un composé durcissable autre que ledit composé durcissable comprenant au moins 3 groupes (méth)acryloyloxy dans une molécule, ou dans son oligomère, pour 100 parties en poids dudit composé durcissable comprenant au moins trois groupes (méth)acryloyloxy dans une molécule, ou dans son oligomère.

3. Plaque antistatique comprenant un substrat et une couche durcie, formée sur le substrat, dans laquelle ladite couche durcie contient 100 parties en poids d'un produit durci d'un composé durcissable comprenant au moins trois groupes (méth)acryloyloxy dans une molécule, ou dans son oligomère, et 2 à 7 parties en poids de particules conductrices possédant une taille particulaire primaire de 0,01 µm ou moins dispersées dans ledit produit durci.

4. Plaque antistatique selon la revendication 3, dans laquelle ledit produit durci contient, en outre, 50 parties en poids ou moins d'un produit durci d'un composé durcissable autre que ledit composé durcissable comprenant au moins trois groupes (méth)acryloyloxy dans une molécule, ou dans son oligomère, pour 100 parties en poids dudit produit durci dudit composé durcissable comprenant au moins trois groupes (méth)acryloyloxy dans une molécule, ou dans son oligomère.

5. Plaque antistatique selon la revendication 3 ou 4, dans laquelle lesdites particules conductrices forment des particules secondaires possédant une taille particulaire de 0,1 µm ou moins, et lesdites particules secondaires sont agencées pour former des structures réticulaires dans ladite couche durcie.

6. Plaque antistatique selon la revendication 3 ou 4, dans laquelle ladite couche durcie possède une épaisseur de 0,5 à 50 µm.

7. Plaque antistatique selon l'une quelconque des revendications 3 à 6, qui porte une couche anti-réfléchissante sur la surface de ladite couche durcie.

8. Panneau avant pour un affichage comprenant une plaque antistatique selon l'une quelconque des revendications 3 à 7.

9. Ecran pour une télévision par projection comprenant une plaque antistatique selon l'une quelconque des revendications 3 à 7.

10. Procédé de production d'une plaque antistatique selon la revendication 3, comprenant les étapes consistant à :
appliquer une composition de revêtement qui comprend 100 parties en poids d'un composé durcissable comprenant au moins 3 groupes (méth)acryloyloxy dans une molécule, ou dans son oligomère, et 2 à 7 parties en poids de particules conductrices possédant une taille particulaire primaire de 0,01 µm ou moins pour former une couche durcissable, et
durcir ladite couche durcissable pour former une couche durcie.

11. Procédé de production d'une plaque antistatique selon la revendication 4, comprenant les étapes consistant à :
appliquer une composition de revêtement qui comprend 100 parties en poids d'un composé durcissable comprenant au moins trois groupes (méth)acryloyloxy dans une molécule, ou dans son oligomère, 50 parties en poids ou moins d'un composé durcissable autre que ledit composé durcissable comprenant au moins trois groupes (méth)acryloyloxy dans une molécule, ou dans son oligomère, et 2 à 7 parties en poids de particules conductrices possédant une taille particulaire primaire de 0,01 µm ou moins pour former une couche durcissable, et
durcir ladite couche durcissable pour former une couche durcie.

12. Procédé de production d'une plaque antistatique selon la revendication 10 ou 11, qui comprend, en outre, l'étape consistant à former une couche anti-réfléchissante sur la surface de ladite couche durcie.
